Europäisches Patentamt

European Patent Office

Office européen des brevets

(19)

(11) Numéro de publication: **0 014 513**
**A1**

(12) **DEMANDE DE BREVET EUROPEEN**

(21) Numéro de dépôt: **80200115.6**

(22) Date de dépôt: **12.02.80**

(51) Int. Cl.³: **B 60 P 1/48**
**B 60 P 1/64**

(30) Priorité: **13.02.79 BE 193433**

(43) Date de publication de la demande:
**20.08.80 Bulletin 80/17**

(84) Etats Contractants Désignés:
**DE FR GB LU NL**

(71) Demandeur: **Constructiewerkhuizen MOL Gebroeders P.V.B.A.**
**Diksmuidesteenweg 63**
**B-8830 Hooglede(BE)**

(72) Inventeur: **Dewulf, Daniel**
**Diksmuidesteenweg 32**
**B-8830 Hooglede(BE)**

(74) Mandataire: **Pirson, Jean et al,**
**c/o Bureau Gevers, S.A. rue de Livourne, 7 bte 1**
**B-1050 Brussels(BE)**

(54) Mécanisme de chargement ou de déchargement d'un container sur ou à partir d'un véhicule.

(57) L'invention concerne un mécanisme de chargement et de déchargement d'un container (12) sur le châssis (2) d'un véhicule, caractérisé en ce qu'il est essentiellement constitué par trois bras (4, 8, 10) montés à charnière entre eux, à la manière de leviers, le premier bras (4) étant relié à charnière (7) par une extrémité au bras principal (8) qui peut être déplacé de sa position normale horizontale de repos au moyen d'au moins un cylindre de pression (13), lequel bras principal (8) est monté à charnière (9) avec un bras de préhension (10) en forme de L qui peut pivoter par rapport à lui grâce à l'intervention d'un vérin (16).

EP 0 014 513 A1

FIG. 3

"Mécanisme de chargement ou de déchargement d'un container sur ou à partir d'un véhicule"

L'invention concerne un mécanisme de chargement ou de déchargement longitudinal d'un container sur le châssis d'un véhicule ou à partir de celui-ci.

Des mécanismes permettant le chargement ou le déchargement de containers sur un véhicule ou à partir de celui-ci sont connus.

Dans certains mécanismes, le container est ancré par un de ses côtés étroits à un bras oscillant , de telle sorte que, grâce au basculement de ce bras, le container peut-être amené à glisser du véhicule ou, au contraire, à être hissé sur celui-ci.

L'expression "container" doit être comprise dans le sens le plus large, de telle sorte que toute forme de récipient, fermé ou non sur les quatre côtés, de pallettes ou de plate-formes de chargement doit être comprise dans le sens du mot "container".

L'invention a pour but de réaliser un mécanisme qui, grâce à sa construction compacte peut effectuer, dans les meilleures conditions, des opérations de chargement ou de déchargement d'un tel container sur le châssis d'un véhicule, tandis que le container en lui-même peut également être basculé, après avoir fait fonctionner un mécanisme de verrouillage.

A cet effet, le mécanisme selon l'invention consiste essentiellement en trois bras montés à charnière entre eux et agissant à la manière de leviers, dont le premier bras est monté à charnière à l'arrière d'un cadre fixé au châssis du véhicule et qui, en position de repos, prend appui sur ce châssis, ce premier bras étant relié à charnière par son extrémité opposée à un bras principal qui peut être relevé par au moins un cylindre de pression à partir de sa position de repos horizontale normale, ledit bras principal étant, de plus, équipé, du côté opposé à son point d'articulation sur le premier bras, d'un bras de préhension, en forme de L, dont l'extrémité libre porte un crochet à l'aide duquel ce bras peut agripper le conteneur précité, ledit mécanisme étant enfin caractérisé en ce que le bras de préhension en L, peut pivoter par rapport au bras principal, grâce à l'action d'un vérin.

Dans une forme de réalisation avantageuse, le bras de préhension en L présente un bras dirigé à la verticale, en position de repos, qui est au moins environ deux fois aussi long que le bras horizontal en position de repos, relié à charnière au bras principal précité.

Selon la même forme de réalisation, le cylindre de pression précité, qui provoque le pivotement du bras de préhension, en L, par rapport au bras principal est monté entre l'extrémité libre du bras principal et la partie verticale, en position de repos, du bras de préhension en L.

Conformément à l'invention le bras principal précité est soulevé par au moins un cylindre de pression monté entre l'extrémité du bras principal disposée le plus en direction du premier bras précité et un point de rotation, situé sur le châssis du véhicule, qui en est le plus éloigné.

D'autres détails et avantages de l'invention ressortiront de la description qui sera donnée ci-après d'un mécanisme de chargement ou déchargement d'un container sur ou à partir d'un véhicule, selon l'invention.

Cette description n'est donnée qu'à titre d'exemple et ne limite pas l'invention. Les notations de référence se rapportent aux figures ci-jointes.

Les figures 1 à 4 représentent schématiquement diverses positions successives du mécanisme depuis la position de repos jusqu'à la position dans laquelle le container est déposé sur le sol.

La figure 5 montre schématiquement le mécanisme utilisé au basculement du container.

Le mécanisme représenté par ces figures est monté sur un véhicule 1. Le châssis 2 de ces véhicules est

0014513

équipé d'un cadre 3. Sur ce cadre 3 est monté à charnière un premier bras 4. Ce premier bras 4 pivote autour d'un axe 5 qui est lui-même logé dans des appuis 6.

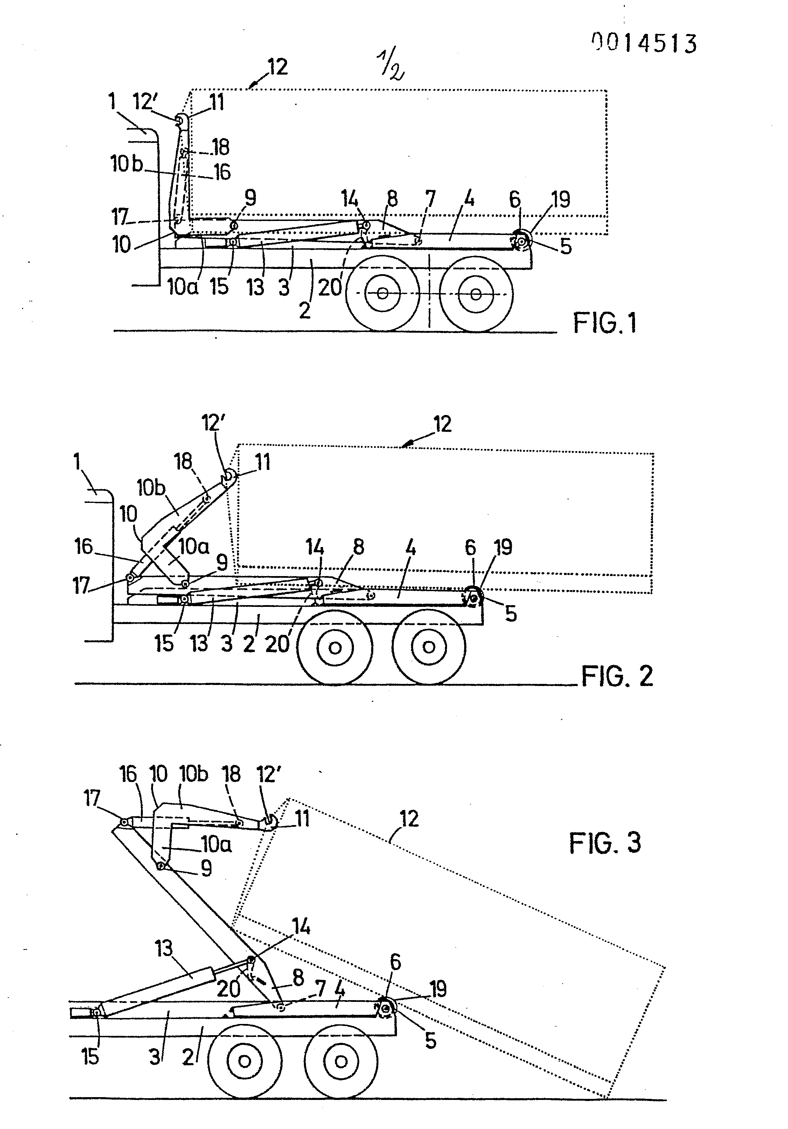

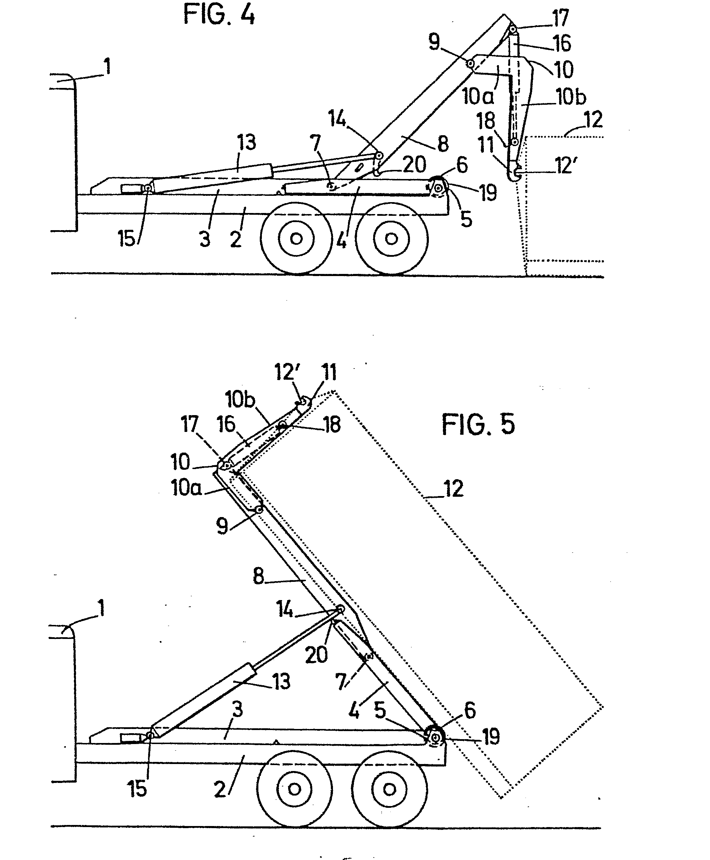

Dans la position de repos, ainsi que dans toutes les positions de travail (figures 2-4), à l'exception de la position dite de basculement (figure 5) ce premier bras demeure dans une position horizontale ou sensiblement horizontale.

Du côté qui est situé à l'opposé de l'axe 5, le premier bras 4 est relié à charnière, en 7, avec le bras principal 8 qui s'étend horizontalement lorsqu'il se trouve en position de repos (figure 1).

A proximité de son extrémité libre, c'est-à-dire à proximité de l'extrémité qui est située à l'opposé de l'axe 5, le bras principal 8 est relié à charnière en 9, avec le bras de préhension 10, en forme de L.

Le bras de préhension en L présente, dans la position de repos, un bras horizontal $10^a$ et un bras vertical $10^b$ qui est équipé, à sa partie supérieure, d'un crochet 11 qui peut se verrouiller sur un anneau 12' du container 12 (figure 1).

Le bras principal 8 est amené à basculer, grâce à l'action de cylindre de pression 13, autour de son point de charnière 7 et cela par rapport au premier bras 4. Les cylindres de pression 13 sont, pour le reste, fixés à charnière en 15 sur le cadre 3 et en 14 sur le bras principal 8. Le bras de préhension 10, en forme de L, pivote, à son tour, autour de l'axe 19, par rapport au bras principal 8, et cela grâce à l'action du cylindre de pression 16 qui est monté à charnière en 17 sur l'extrémité du bras principal 8 et en 18 sur le bras de préhension 10.

Enfin, à hauteur de l'axe 5, sont montés sur le châssis 3, deux cylindres 19, montés fous, sur lesquels le container 12 peut rouler, aussi bien lors des opérations de chargement que de déchargement.

Dans la position de repos représentée à la figure 1, le premier bras 4 et le bras principal 8 reposent horizontalement ou sensiblement horizontalement dans le cadre 3. Les bras $10^a$ et $10^b$ du bras de préhension en forme de L se trouvent alors dans les positions respectives horizontale et verticale, tandis que le container 12 repose entièrement sur le châssis 3. Le crochet 11 est, aussi bien en position de repos qu'au cours des opérations de chargement et de déchargement, verrouillé au mécanisme.

La première phase du déchargement est illustrée par la figure 2. Le premier bras 4 ne se déplace pas au cours de cette opération.

Par contre, le bras de préhension en forme de L est amené à basculer par rapport au bras principal 8, grâce au cylindre de pression 16, et cela autour du point de charnière 9, de telle sorte que le container roule sur les cylindres fous 19. Ce déplacement du container est réalisé par le cylindre de pression 16 qui fait basculer le bras de préhension 10 jusqu'au moment où celui-ci occupe la position représentée à la figure 2.

Le container poursuit son mouvement de basculement en roulant sur les cylindres fous 19, grâce à l'action des cylindres de pression 13 qui font basculer le bras principal 8 de la position horizontale en position verticale. Au cours de ce mouvement de basculement, le container touche le sol par une de ses extrémités. A ce moment, les freins du véhicule, qui étaient bloqués jusqu'ici, sont désengagés (figure 3).

Sur l'influence du déplacement ultérieur des cylindres de pression 13, le container continue à se déplacer jusqu'au moment ou il repose complètement sur le sol. Ceci se produit alors que le véhicule se déplace et s'écarte du container sous l'influence du basculement ultérieur du bras principal 8. En désengageant le crochet 11, on libère le container (figure 4).

Le chargement du container est effectué dans un cycle inverse que celui qui vient d'être décrit.

Le mécanisme selon l'invention peut également être aménagé de telle sorte que le container puisse

0014513

faire office de benne basculante. A cet effet il suffit de réunir en un tout rigide le premier bras 4 et le bras principal 8. Ceci peut être effectué en enclenchant le crochet 20, de telle sorte que les bras précités 4 et 8 forment un ensemble solidaire. Dans un cas de l'espèce, on ne fait usage que des cylindres de pression principaux 13, tandis que le bras de préhension 10 demeure en position de repos.

Il résulte donc clairement de la description qui est donnée ci-dessus que le mécanisme fonctionne de manière extrêmement souple parce que le crochet du bras de préhension décrit un arc de cercle par rapport au bras principal 8 et ne se déplace plus de manière linéaire, comme cela se produisait en général dans les mécanismes connus à ce jour.

Le chargement ou le déchargement du container sur ou à partir du châssis d'un véhicule s'effectue alors que tout frottement entre le container et le châssis est éliminé.

Le chargement et le déchargement ont donc lieu dans des conditions qui sont les plus favorables à la longévité du container et du châssis.

Il est évident cependant que l'invention n'est pas limitée à la forme de réalisation décrite ci-dessus et que bien des modifications pourraient y être apportées sans sortir du cadre de la présente demande de brevet.

REVENDICATIONS

1. Mécanisme de chargement ou de déchargement longitudinal d'un container sur ou à partir d'un véhicule, caractérisé en ce qu'il consiste essentiellement en trois bras montés à charnière entre eux et agissant à la manière de leviers, dont le premier bras est monté à charnière à l'arrière d'un cadre fixé au châssis du véhicule et qui, en position de repos, prend appui sur ce châssis, ce premier bras étant relié à charnière par son extrémité opposée à un bras principal qui peut être relevé par au moins un cylindre de pression à partir de sa position de repos horizontal normale, ledit bras principal étant, de plus, équipé, du côté opposé à son point d'articulation sur le premier bras, d'un bras de préhension, en forme de L, dont l'extrémité libre porte un crochet à l'aide duquel ce bras peut agripper le conteneur précité et caractérisé, enfin, en ce que le bras de préhension en L peut pivoter par rapport au bras principal, grâce à l'action d'un vérin.

2. Mécanisme selon la revendication 1, caractérisé en ce que le bras de préhension en L présente un bras dirigé à la verticale, en position en repos, qui est au moins environ deux fois aussi long que le bras, horizontal en position de repos, relié à charnière au bras principal précité.

3. Mécanisme selon l'une quelconque des revendications 1 ou 2, caractérisé en ce que le cylindre de pression précité, qui provoque le pivotement du bras de préhension en L par rapport au bras principal est monté entre l'extrémité libre du bras principal et la partie verticale, en position de repos, du bras de préhension en L.

4. Mécanisme selon l'une quelconque des revendications 1 ou 2, caractérisé en ce que le bras principal précité est soulevé par au moins un cylindre de pression monté entre l'extrémité du bras principal disposée le plus en direction du premier bras précité et un point de rotation, situé sur le châssis du véhicule, qui en est le plus éloigné.

5. Mécanisme selon la revendication 1, caractérisé en ce que le premier bras et le bras principal précités peuvent former un ensemble rigide, grâce à un mécanisme de verrouillage formant une liaison rigide entre ces deux bras.

6. Mécanisme selon l'une quelconque des revendications 1 à 5, caractérisé en ce que la liaison à charnière entre le cylindre de pression qui fait pivoter le bras de préhension en L par rapport au bras principal, est située en dehors du point de rotation du bras principal par rapport au premier bras et en dehors du point de rotation du cylindre de pression qui agit sur le bras principal, toutes choses étant telles que le crochet précité décrit une trajectoire courbe.

0014513

FIG.1

FIG. 2

FIG. 3

0014513

FIG. 4

FIG. 5

Office européen
des brevets

**RAPPORT DE RECHERCHE EUROPEENNE**

Numéro de la demande

EP 80 20 0115

| | **DOCUMENTS CONSIDERES COMME PERTINENTS** | | CLASSEMENT DE LA DEMANDE (Int. Cl.3) |
|---|---|---|---|
| Catégorie | Citation du document avec indication, en cas de besoin, des parties pertinentes | Revendication concernée | |
| X | FR - A1 - 2 385 557 (LEMAIRE) <br> * document en entier * <br> -- | 1,2, 4,5 | B 60 P 1/48 <br> B 60 P 1/64 |
| X | DE - A1 - 2 726 353 (E. GERGEN et al.) <br> * document en entier * <br> -- | 1,3, 6 | |
| A | DE - A1 - 2 821 295 (LEMAIRE) <br> & FR - A1 - 2 391 092 <br> -- | | |
| A | DE - A1 - 2 557 169 (GUIMA) <br> ---- | | **DOMAINES TECHNIQUES RECHERCHES (Int. Cl.3)** <br><br> B 60 P 1/00 |

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
   document correspondant

X Le présent rapport de recherche a été établi pour toutes les revendications

| Lieu de la recherche | Date d'achèvement de la recherche | Examinateur |
|---|---|---|
| Berlin | 16-04-1980 | LUDWIG |

OEB Form 1503.1  06.78